# EUROPEAN PATENT APPLICATION

(11) **EP 3 840 357 A1**
(43) Date of publication of application: **23.06.2021**
(21) Application number: 18932913.9
(22) Date of filing: 04.09.2018
(51) Int. Cl.: H04N 5/232

(54) **PHOTOGRAPHING CONTROL METHOD, APPARATUS AND DEVICE AND DEVICE AND STORAGE MEDIUM**

(71) Applicant: SZ DJI Technology Co., Ltd., Shenzhen, Guangdong 518057 (CN)
(72) Inventor: ZHANG, Liliang, Shenzhen, Guangdong 518057 (CN); PANG, Lei, Shenzhen, Guangdong 518057 (CN); LIU, Ping, Shenzhen, Guangdong 518057 (CN)
(74) Representative: Goddar, Heinz J.
(86) International application number: PCT/CN2018/103976
(87) International publication number: WO 2020/047745

(57) **Abstract**

An embodiment of the present disclosure provides a photographing control method, device, apparatus, and storage medium. The method includes: acquiring an image output by a photographing device; detecting a photographing mode of a photographing apparatus; when the photographing mode of the photographing apparatus is a self-portrait mode, detecting at least one target object in the image and determining position information of the at least one target object in the image; according to the position information of the at least one target object in the image, controlling a photographing parameter of the photographing device to shoot the at least one target object in a preset setting. In the embodiment of the present disclosure, by detecting the at least one target object in the image output by the photographing device included in the photographing apparatus, and according to the position information of the at least one target object in the image, the photographing parameter of the photographing device are controlled to maintain the at least one target object at the preset position or preset size in the captured image to avoid affecting the photographing effect of the photographing apparatus due to inability of the user to view a composition of the captured image.

## Description

### TECHNICAL FIELD

The present disclosure relates to the field of image processing, and in particular relates to a photographing control method, device, apparatus, and storage medium.

### BACKGROUND TECHNOLOGY

In the existing technology, when a user takes images through a photographing apparatus, the photographing preview interface of the photographing apparatus can display the captured images, and the user can preview the captured images in real-time.

However, for some photographing apparatuses, the photographing preview interface may not be provided, and accordingly, the user cannot preview the captured images in real-time, and cannot see the composition of the captured images in real-time, and thus, the images captured by the photographing apparatus may not achieve the desired effect of the user, thereby affecting the photographing effect of the photographing apparatus. For example, self-portrait has become a photographing scene frequently used by many users. Usually, when a user uses a mobile phone to take a self-portrait, a front camera may be used to observe the real-time preview of the captured images through the screen, but the front camera usually cannot provide a rear camera photographing effect. However, when the user uses the rear camera to take a self-portrait, he cannot observe the real-time preview of the captured images, thus, the photographing effect such as a desired composition cannot be achieved. Also, when the user users a device such as a digital camera to take self-portrait, he cannot observe the real-time preview of the captured images.

### SUMMARY OF THE DISCLOSURE

The present disclosure provides a photographing control method, device, apparatus, and storage medium, to avoid affecting the photographing effect of the photographing apparatus due to the inability of the user to view the composition of the captured image.

A first aspect of the embodiments of the present disclosure provides a photographing control method, which is applied to a photographing apparatus. The photographing apparatus includes a photographing device. The method includes: acquiring images output by the photographing device; detecting a photographing mode of the photographing apparatus; when the photographing mode of the photographing apparatus is the self-portrait mode, detecting at least one target object in the image, and determine position information of the at least one target object in the image; and according to the position information of the at least one target object in the image, controlling photographing parameters of the photographing device, to capture images of at least one target object in the preset setting.

A second aspect of the embodiments of the present disclosure provides a control device, including: a memory and a processor. The memory is configured to store program codes. The processor calls the program code, being configured to perform the following steps when the program code is executed: obtaining the image output by a photographing device; detecting a photographing mode of a photographing apparatus, the photographing apparatus including the photographing device; and when the photographing mode of the photographing apparatus is in the self-portrait mode, detecting at least one target object in the image, and determining the position information of the at least one target object in the image; and according to the position information of the at least one target object in the image, controlling photographing parameters of the photographing device to capture images of the at least one target object with the preset setting.

A third aspect of the embodiments of the present disclosure provides a photographing apparatus, including: a body; a photographing device installed on the body, being configured to collect image information; and a control device according to the second aspect.

A fourth aspect of the embodiments of the present disclosure provides a computer-readable storage medium on which a computer program is stored, and the computer program is executed by a processor to implement the method according to the first aspect.

According to the photographing control method, device, apparatus and storage medium provided in this embodiment, when the photographing apparatus is in the self-portrait mode, at least one target object in the image output by the photographing device included in the photographing apparatus may be detected. According to the position information of the at least one target object in in the image, the photographing parameters of the photographing device may be controlled, so that the at least one target object can be maintained at the preset position of the captured image or in a preset size, to avoid affecting the photographing effect of the photographing device due to the inability of the user to view the composition of the captured image.

### BRIEF DESCRIPTION OF THE DRAWINGS

In order to more clearly explain the technical solutions in the embodiments of the present disclosure, the following will briefly introduce the drawings required for the description of the embodiments. Apparently, the drawings in the following description are some embodiments of the present disclosure. For those of ordinary skill in the art, other drawings can also be obtained based on these drawings without making creative efforts.
FIG. 1 is a flowchart of a photographing control method according to an embodiment of the present disclosure;
FIG. 2 is a schematic diagram of an image output by a photographing device according to an embodiment of the present disclosure;
FIG. 3 is a schematic diagram of an image output by another photographing device according to an embodiment of the present disclosure;
FIG. 4 is a schematic diagram of an image output by another photographing device according to an embodiment of the present disclosure;
FIG. 5 is a flowchart of a photographing control method according to another embodiment of the present disclosure;
FIG. 6 is a schematic diagram of an image output by another photographing device according to an embodiment of the present disclosure;
FIG. 7 is a schematic diagram of an image output by another photographing device according to an embodiment of the present disclosure;
FIG. 8 is a schematic diagram of an image output by another photographing device according to an embodiment of the present disclosure;
FIG. 9 is a flowchart of a photographing control method according to another embodiment of the present disclosure;
FIG. 10 is a structural diagram of a control device according to an embodiment of the present disclosure; and
FIG. 11 is a structural diagram of a photographing apparatus according to another embodiment of the present disclosure.

Reference Numerals: 21: image; 22: image; 23: target object; 40: area; 61: target object; 62: target object; 63: target object; 60: image; 71: captured image; 81: captured image; 100: control device; 101: memory; 102: processor; 110: photographing apparatus; 111: body; 112: photographing device; 113: control device.

### DETAILED DESCRIPTION OF THE EMBODIMENTS

The technical solutions in the embodiments of the present disclosure will be described clearly below with reference to the drawings in the embodiments of the present disclosure. Apparently, the described embodiments are only some of the embodiments of the present disclosure, but not all the embodiments. Based on the embodiments of the present disclosure, all other embodiments obtained by those of ordinary skill in the art without making creative efforts fall within the scope of the disclosure.

It should be noted that when a component is said to be "fixed" to another component, it can be directly on another component or it can also exist in an intermediate component. When a component is considered "connected to" another component, it can be directly connected to another component or there may be an intermediate component at the same time.

Unless otherwise defined, all technical and scientific terms used herein have the same meaning as commonly understood by those skilled in the technical field of the present disclosure. The terminologies used in the description of the present disclosure are for the purpose of describing specific embodiments, and are not intended to limit the present disclosure. The term "and/or" as used herein includes any and all combinations of one or more related listed items.

The following describes some embodiments of the present disclosure in detail with reference to the accompanying drawings. In the case of no conflict, the following embodiments and features in the embodiments may be combined with each other.

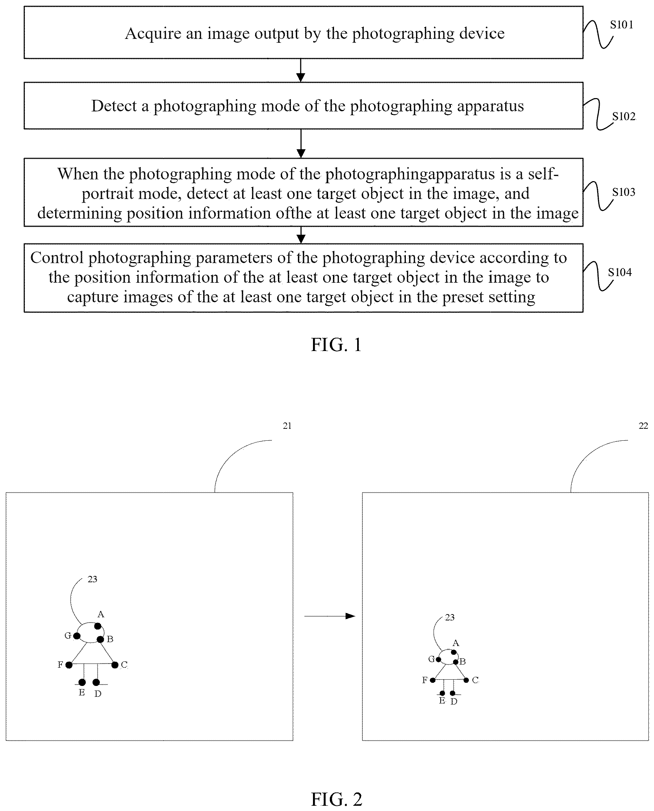

An embodiment of the present disclosure provides a photographing control method. FIG. 1 is a flowchart of a photographing control method according to an embodiment of the present disclosure. The photographing control method described in this embodiment can be applied to a photographing apparatus, which includes a photographing device. Optionally, the photographing device may be a hand-held gimbal, camera, video camera, or other device with a photographing function such as a smart terminal. Correspondingly, the photographing device may specifically be an optical component of the photographing apparatus, such as a lens. As shown in FIG. 1, the method in this embodiment may include:

Step S101: Acquiring an image output by the photographing device.

In this embodiment, a hand-held gimbal is taken as an example of the photographing apparatus for schematic description. The hand-held gimbal includes an optical component such as a lens; that is, the optical component such as a lens can be mounted on the hand-held gimbal. The optical component can collect image information in real-time. In addition, the hand-held gimbal may further include a control device, which may execute the photographing control method described in this embodiment. Specifically, the control device can obtain the image information collected by the optical component in real-time.

Step S102: Detecting a photographing mode of the photographing apparatus.

In this embodiment, the photographing apparatus such as a hand-held gimbal may have multiple photographing modes such as a single photographing mode, a continuous photographing mode, a panorama mode, a scene (e.g., portrait, landscape, sports, etc.) mode. The control device can also detect the photographing mode of the photographing apparatus.

In a feasible implementation, detecting the photographing mode of the photographing apparatus includes: detecting a user's selection operation of a photographing mode of the photographing apparatus; and determining the photographing mode of the photographing apparatus according to the selection operation.

Optionally, detecting the user's selection operation of the photographing mode of the photographing apparatus includes: detecting the user's selection operation of switching the photographing device to face the user for photographing.

Specifically, the photographing apparatus, for example, a hand-held gimbal, may be provided with keys or buttons, so that the user can set the photographing mode of the photographing apparatus by operating the keys or buttons. For example, when the photographing device is a lens mounted on a hand-held gimbal, the key or button can be configured to control rotation of at least one axis of the hand-held gimbal so that the lens rotates in a yaw direction to face the user, thereby switching the photographing device to face the user for photographing. In another example, when the photographing device is a mobile phone installed on a hand-held gimbal, the key or button can be configured to control the photographing device to switch to a front camera or to a rear camera. Correspondingly, the control device can detect operation of the button by the user, and determine a photographing mode of the hand-held gimbal according to the operation. For example, when the user clicks the key or button, the photographing device can be switched to face the user for photographing, and accordingly, the control device can detect a click operation by the user to switch the photographing device to the front camera. When the user double-clicks the key or button, the photographing device switches to normal photographing, and accordingly, the control device can detect a double-click operation by which the user switches the photographing device to normal photographing.

In other embodiments, the photographing apparatus may be an apparatus specifically having a photographing function such as a smart terminal, and the smart terminal may be installed with an application (Application, APP), and the application provides a user interface, and the user display interface may be configured to set a virtual key or virtual button of the photographing mode, the user may set the photographing mode of the photographing apparatus by operating the virtual key or virtual button. Correspondingly, the control device can detect the user's operation on the virtual key or virtual button, and determine that the photographing device switches to the front camera or the rear camera according to the operation.

Alternatively, the detecting the user's selection operation of the photographing mode of the photographing apparatus includes: detecting the user's selection operation of rotating the photographing device toward the user around yaw axis as rotation axis.

For example, the photographing apparatus such as a hand-held gimbal may be provided with keys or buttons, and the keys or buttons are used to control the photographing device to rotate around the yaw axis as the rotation axis. When the user needs to take a self-portrait, the user can press or continuously press the button or button. During the pressing or continuous pressing, the photographing device can continuously rotate around the yaw axis as the rotation axis, and when the photographing device rotates around the yaw axis as the rotation axis to an orientation that faces the user, the user can stop pressing the key or button. Correspondingly, the control device can detect the operation that the user presses the key or button and a rotation angle when the photographing device rotates around the yaw axis as the rotation axis in real-time. When the rotation axis rotates to the orientation that faces the user, the control device determines that the photographing device has entered the self-portrait mode.

As another feasible implementation, detecting the photographing mode of the photographing apparatus includes: detecting the attitude of the photographing apparatus; and determining the photographing mode of the photographing apparatus according to the attitude of the photographing apparatus.

Specifically, the control device may detect the attitude of the photographing apparatus such as a hand-held gimbal in real-time, and determine the photographing mode of the photographing apparatus according to the attitude of the photographing apparatus. Specifically, for example, the hand-held gimbal is a three-axis gimbal. The three-axis gimbal can rotate in directions of pitch axis, yaw axis, and roll axis. The control device can detect rotation angles of the three-axis gimbal in the pitch axis, yaw axis, and roll axis, and determine an attitude of the hand-held gimbal according to the rotation angles, and further determine whether the hand-held gimbal enters the self-portrait mode according to the attitude of the hand-held gimbal.

Optionally, determining the photographing mode of the photographing apparatus according to the attitude of the photographing apparatus includes: when the difference between the rotation angle of the photographing apparatus rotating around the yaw axis as the rotation axis and the 180 degrees is less than a first angle threshold, and the angle between the yaw axis of the photographing apparatus and the vertical direction is less than a second angle threshold, the photographing mode of the photographing apparatus can be determined to be the self-portrait mode.

For example, yaw angle of the hand-held gimbal at the current moment is 0 degree. From the current moment, the user rotates the hand-held gimbal so that the hand-held gimbal rotates around the yaw axis as the rotation axis, and accordingly, the yaw angle of the hand-held gimbal is constantly changing. When the control device detects that the rotation angle of the hand-held gimbal around the yaw axis as the rotation axis is close to 180 degrees, and the yaw axis of the photographing apparatus remains substantially vertical, the photographing mode of the photographing apparatus can be determined to be in the self-portrait mode. Optionally, the control device may only detect a attitude change of the hand-held gimbal handle, and determine to enter the self-portrait mode according to the attitude change of the handle. For example, in some cases, when the hand-held gimbal is recording normally in a stabilization mode, the user rotates the handle about 180 degrees, which indicates his desire to use the hand-held gimbal to take a self-portrait, even if the gimbal axis still maintains the stabilization mode at this time. At this time, the control device can determine to enter the self-portrait mode by detecting the attitude change of the handle.

Step S103: When the photographing mode of the photographing apparatus is the self-portrait mode, detecting at least one target object in the image, and determining position information of the at least one target object in the image.

When the control device determines that the photographing mode of the photographing apparatus is in the self-portrait mode, the control device detects whether there is a target object in the image collected by the photographing device. The target object may specifically be a person, a car, a boat, etc. Optionally, the control device may detect the target object in the image through a neural network model. For example, the control device may detect the position and size of the target object in the image through the neural network model. Optionally, the target object in the image is not limited to one, and may be multiple.

Step S104: Controlling photographing parameters of the photographing device according to the position information of the at least one target object in the image to capture images of the at least one target object in the preset setting.

Optionally, the preset setting includes at least one of the following: the at least one target object being at a preset position of the photographing screen of the photographing device, and a preset size of the at least one target object being in the image captured by the photographing device.

For example, the at least one target object may be moving relative to the photographing apparatus, or may be stationary. If the position of the at least one target object in the image is not at the preset position, the control device may control the photographing parameters of the photographing device according to the position information of the at least one target object in the image, so that the at least one target object remains to be at the preset position of the image captured the photographing device. Optionally, the photographing parameters of the photographing device may include at least one of the following: focal length, shutter, aperture, and photographing attitude. When the photographing parameter includes the photographing attitude, controlling the photographing parameters of the photographing device may include controlling the attitude of the photographing device on the axes of pitch, yaw, and roll.

Alternatively, the at least one target object may be moving relative to the photographing apparatus, and the size of the at least one target object in the image may change with time. When the size of the at least one target object in the image is not the preset size, the photographing parameters of the photographing device may be controlled, e.g., the photographing device may be controlled to zoom, so that the at least one target object maintains the preset size in the image captured by the photographing device.

In a feasible implementation, controlling the photographing parameters of the photographing device according to the position information of the at least one target object in the image to capture images of the at least one object in the preset setting includes: according to the position information of the target object in the image, using a tracking algorithm to track the target object in the image; and during the process of tracking the target object in the image, controlling the photographing parameters of the photographing device to maintain the target at the preset position in the image captured by the photographing device.

As shown in FIG. 2, captured images 21 and 22 represent two frames of images successively output by the photographing device, respectively. When the photographing device outputs the captured image 21, the control device detects the target object 23 through the neural network model and determines it according to a feature point detection algorithm to determine feature points of the target object 23, e.g., A, B, C, D, E, F, and G. Further, the tracking algorithm employed by the control device may specifically be Kanade-Lucas-Tomasi Feature Tracker (KLT) feature tracking algorithm for tracking the target object 23. For example, positions of the feature points A, B, C, D, E, F, G in the captured image 22 can be determined according to the KLT feature tracking algorithm, and the position of the target object 23 in the captured image 22 can be determined according to the positions of the feature points A, B, C, D, E, F, G in the captured image 22. Optionally, the control device can also determine the position of the target object 23 in an image after the captured image 22, thereby achieving tracking of the target object 23. During the process of tracking process, the position of the target object 23 in different images may be different, and in this situation, the control device can control the photographing parameters of the photographing device so that the target object 23 can remain at the preset position in the image captured by the photographing device.

Optionally, during the process of tracking of the target object in the image, controlling the photographing parameters of the photographing device to maintain the target object at the preset position in the image captured by the photographing device includes: during the process of tracking of the target object in the image, controlling the photographing attitude of the photographing device to maintain the target object at the preset position in the image captured by the photographing device. Optionally, controlling the photographing attitude of the photographing device includes: controlling the photographing attitude of the photographing device by adjusting an attitude of the photographing apparatus.

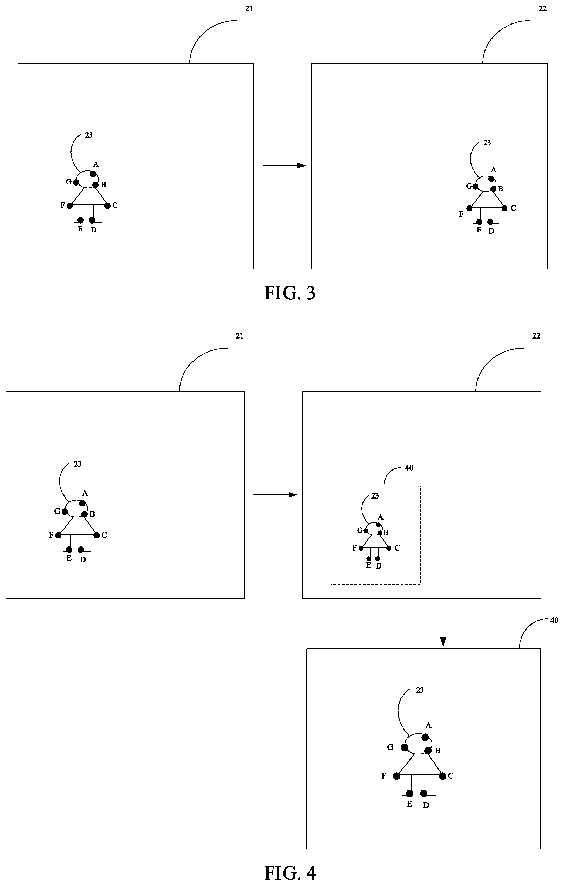

As shown in FIG. 3, the position of the target object 23 in the captured image 21 and the position of the target object 23 in the captured image 22 are different. In this situation, the control device may adjust the photographing attitude of the photographing device to maintain the target object 23 at the preset position in the captured image. Optionally, the photographing device may be a lens disposed in the hand-held gimbal, and the control device can adjust the attitude of the hand-held gimbal by controlling a rotation angle of the hand-held gimbal in the three-axis direction, thereby controlling the photographing attitude of the lens.

In some embodiments, the method further includes: during the process of tracking the target object in the image, cropping an area including the target object in the image to make the target object to be in the preset position in the image captured by the photographing device.

As shown in FIG. 4, the target object 23 is larger in the captured image 21 and smaller in the captured image 22. In order to enlarge the target object 23 in the captured image 22 to the preset size, the control device may crop an area including the target object 23 in the captured image 22 such as the area 40, and enlarge the cropped area 40, so that the size of the target object 23 in the captured image can be the preset size, and the target object 23 can be maintained at the preset position in the captured image, e.g., to maintain the target object 23 in the center of the captured image.

In another feasible implementation, controlling the photographing parameters of the photographing device according to the position information of the at least one target object in the image to capture images of the at least one target in the preset setting includes: tracking the target object in the image using a tracking algorithm according to the position information of the target object in the image; and during the process of tracking the target object in the image, controlling the photographing parameters of the photographing device to maintain the target object at the preset size in the image captured by the photographing device.

As shown in FIG. 2, the size of the target object 23 in different images varies. For example, the target object 23 is larger in the captured image 21 and smaller in the captured image 22. During the process of tracking of the target object 23, the control device may control the photographing parameters of the photographing device to maintain the target object 23 at the preset size in the image captured by the photographing device.

Optionally, during the process of tracking the target object in the image, controlling the photographing parameters of the photographing device to maintain the target object remains in the preset size in the image captured by the photographing device includes: during the process of tracking of the target object in the image, controlling the photographing device to zoom to maintain the target object at the preset size in the image captured by the photographing device .

As shown in FIG. 2, the target object 23 is larger in the captured image 21 and smaller in the captured image 22. In this situation, the control device may adjust a focal length of the photographing device to maintain the size of the target object 23 to be at the preset size in the captured image.

In some embodiments, the method further includes: during the process of tracking the target object in the image, cropping an area including the target object in the image to maintain the target object at the preset size in the image captured by the photographing device.

As shown in FIG. 4, the target object 23 is larger in the captured image 21 and smaller in the captured image 22. In order to enlarge the target object 23 in the captured image 22 to the preset size, the control device may crop an area including the target object 23 in the captured image 22 such as an area 40, and enlarge the cropped area40 to maintain the target object 23 to be at the preset size in the captured image.

In this embodiment, when the photographing apparatus is in the self-portrait mode, at least one target object in the image output by the photographing device included in the photographing apparatus may be detected, and the photographing parameters of the photographing device may be controlled according to the position information of the at least one target object in the image, so that the at least one target object can be maintained at the preset position or at a preset size in the captured image, to avoid affecting the photographing effect of the photographing apparatus due to the inability of the user to view the composition of the captured image.

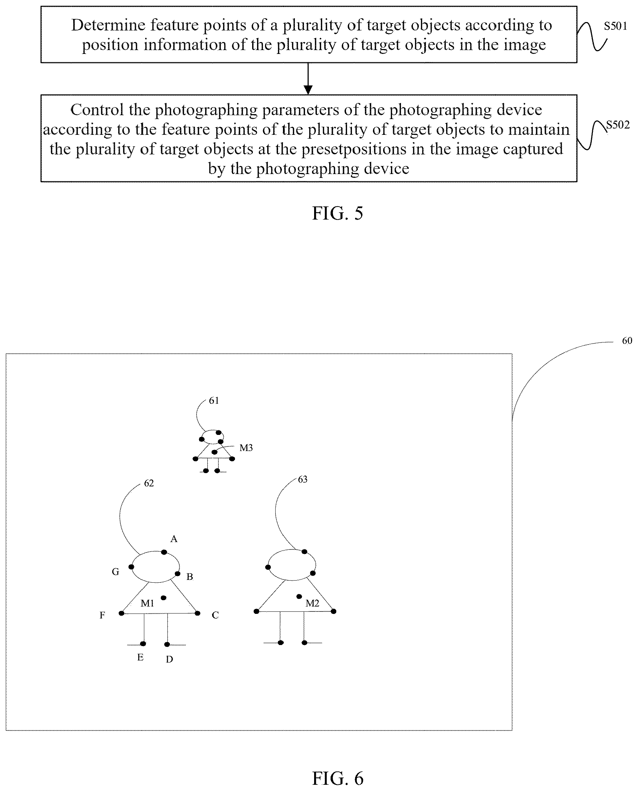

An embodiment of the present disclosure provides a photographing control method. FIG. 5 is a flowchart of a photographing control method according to another embodiment of the present disclosure. As shown in FIG. 5, based on the embodiment shown in FIG. 1, controlling the photographing parameters of the photographing device according to the position information of the at least one target object in the image to capture images of the at least one target object in the preset setting may include:

Step S501: Determining feature points of a plurality of target objects according to position information of the plurality of target objects in the image.

As shown in FIG. 6, a captured image 60 output by the photographing device includes a plurality of target objects such as target object 61, target object 62, and target object 63. The control device can detect feature points of the plurality of target objects. For example, feature points of the target object 61 are A, B, C, D, E, F, G, and according to the position information of the feature points of the target object 61 in the captured image 60, a center point M1 of the target object 61 can be determined in the captured image 60. Likewise, the control device can determine position information of a center point M2 of the target object 62 in the captured image 60 and position information of a center point M3 of the target object 63 in the captured image 60. It can be understood that sizes of the target object 61, the target object 62, and the target object 63 in the captured image 60 may be different. When calculating the center points of the target object 61, the target object 62, and the target object 63, the feature points of each target object may be calculated for weights according to the size of each target object in the image to obtain the center point of the target object in the image.

Step S502: Controlling the photographing parameters of the photographing device according to the feature points of the plurality of target objects to maintain the plurality of target objects at the preset positions in the image captured by the photographing device.

The control device may control the photographing parameters of the photographing device according to the position information of the center point M1, the center point M2, and the center point M3 in the captured image 60, such as adjusting the focal length of the photographing device and/or control the photographing attitude of the photographing device to maintain the target object 61, the target object 62, and the target object 63 at the preset positions in the captured image. Optionally, controlling the photographing parameters of the photographing device to maintain the target object 61, the target object 62, and the target object 63 at the preset positions in the captured image may include the following feasible implementations:

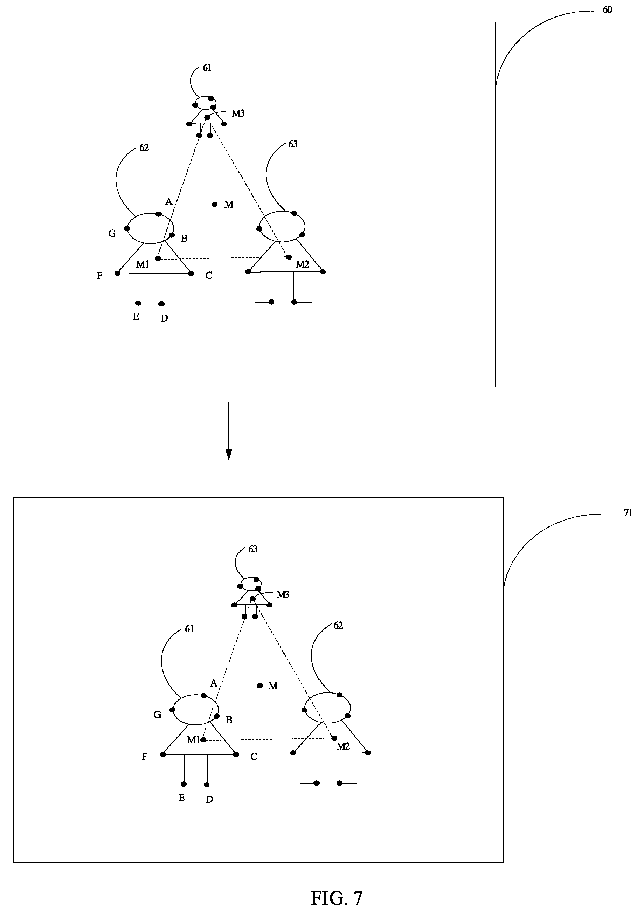

A feasible implementation method may be as shown in FIG. 7, according to the position information of the center point M1, the center point M2, and the center point M3 in the captured image 60, a center point M of the center point M1, the center point M2, and the center point M3 may be determined, and further, according to the position information of the center point M in the captured image 60, the photographing parameters of the photographing device may be controlled to maintain the center point M at the preset position of the captured image. For example, the center point M may be maintained at the center of the captured image 71. Optionally, the center point M of the center point M1, the center point M2, and the center point M3 may be the center point of a geometric figure composed of the center point M1, the center point M2, and the center point M3.

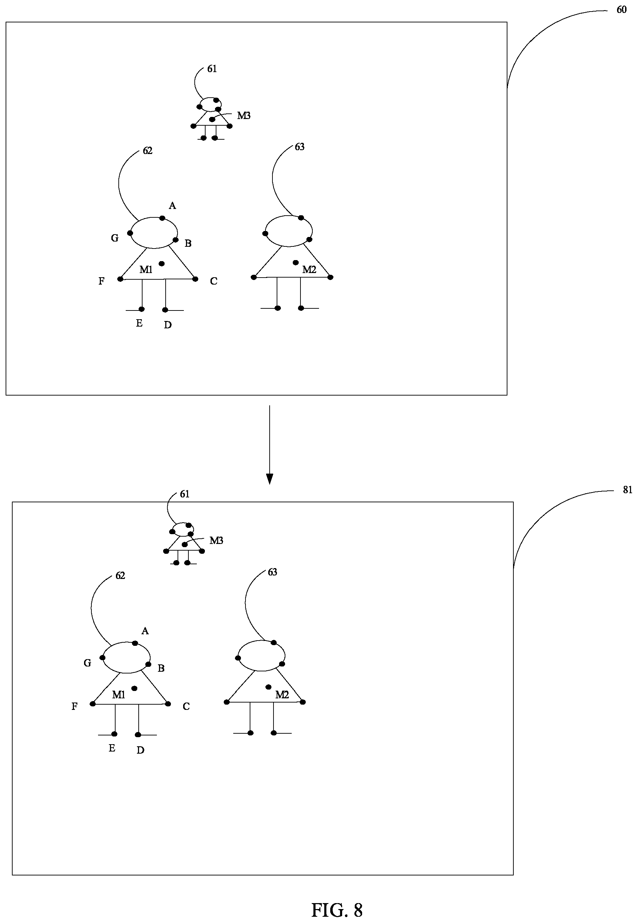

In some embodiments, since sizes of the target object 61, the target object 62, and the target object 63 may be different in the captured image 60, when calculating the position information of the center point M in the image 60, the position information of the center point M1, the center point M2, and the center point M3 may be calculated for weights according to the size of each target object to obtain the position information of the center point M in the image 60. Another possible implementation method may be as shown in FIG. 8, according to the position information of the center point M1, the center point M2, and the center point M3 in the image 60, the photographing parameters of the photographing device to maintain at least one center point of the center point M1, the center point M2, the center point M3 at the preset position of the captured image. For example, the center point M2 may be maintained to be at a center position of the captured image 81.

It can be understood that controlling the photographing parameters of the photographing device according to the center points of plurality of target objects to maintain the plurality of target objects at the preset positions of the captured image is only a feasible implementation, and in other embodiments, there is no limitation to be based on the center points of the plurality of target objects, and other feature points of the plurality of target objects may also be based on to control the photographing parameters of the photographing device to maintain the plurality of target objects at the preset positions of the captured image.

In this embodiment, the specific methods and principles of controlling the photographing parameters of the photographing device are consistent with the above embodiments, and are not repeated here.

In this embodiment, the center points of the plurality of target objects can be determined according to the position information of the plurality of target objects in the image, and the photographing parameters of the photographing device can be controlled according to the center points of the plurality of target objects so that the center points can be maintained at the preset positions of the image captured by the photographing device, which implements a composition of the plurality of target objects in the self-portrait mode of the photographing apparatus.

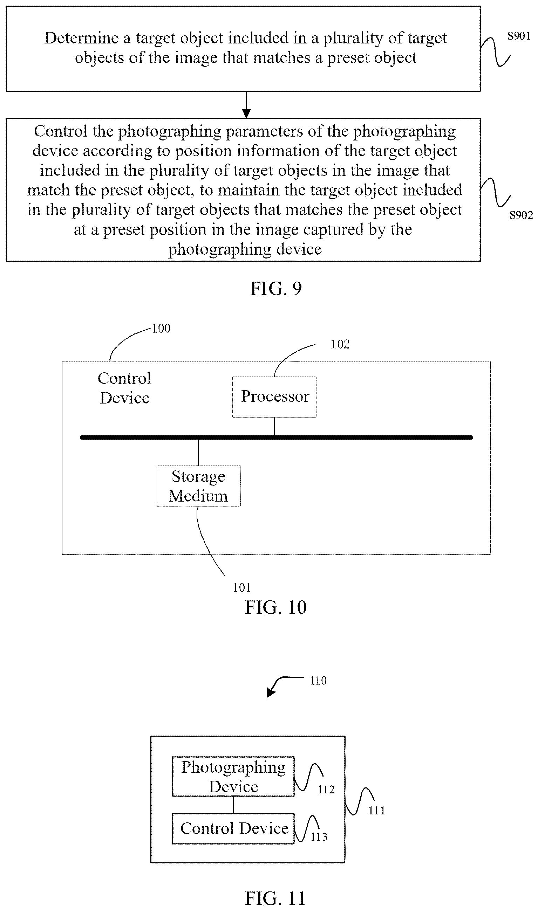

An embodiment of the present disclosure provides a photographing control method. FIG. 9 is a flowchart of a photographing control method according to another embodiment of the present disclosure. As shown in FIG. 9, based on the embodiment shown in FIG. 1, controlling the photographing parameters of the photographing device according to the position information of the at least one target object in the image to capture images of the at least one target object in the preset setting may include:

Step S901: Determining a target object included in a plurality of target objects of the image that matches a preset object.

In this embodiment, the photographing apparatus may pre-store image information or feature point information of a preset object, and the preset object may specifically be a user of the photographing apparatus. When the control device detects a plurality of target objects in the image output by the photographing device, it may compare image information of each target object of the plurality of target objects with image information of the preset object to determine the target object included in the plurality of target objects that matches the preset object.

Step S902: Controlling the photographing parameters of the photographing device according to position information of the target object included in the plurality of target objects in the image that match the preset object, to maintain the target object included in the plurality of target objects that matches the preset object at a preset position in the image captured by the photographing device.

As shown in FIG. 6, assuming that the target object 62 matches the preset object, the control device may control the photographing parameters of the photographing device according to position information of the target object 62 in the image, such as adjusting the focal length of the photographing device and/or controlling the photographing attitude of the photographing device to maintain the target object 62 at the preset position of the captured image. For example, the target object 62 may be maintained at a center position of the captured image, to implement the composition of the plurality of target objects.

In this embodiment, the specific methods and principles of controlling the photographing parameters of the photographing device are consistent with the above embodiments, and are not repeated herein again.

In this embodiment, according to the position information of the plurality of target objects in the image, a target object that matches the preset object among the plurality of target objects can be detected, and according to the position information of the target object that matches the preset object among the plurality of target objects in the image, the photographing parameters of the photographing device may be controlled so that the target object that matches the preset object among the plurality of target objects can be maintained at the preset position in the image captured by the photographing device, thereby implementing the composition of the plurality of target objects in the self-portrait mode of the photographing apparatus.

An embodiment of the present disclosure provides a control device. FIG. 10 is a structural diagram of a control device according to an embodiment of the present disclosure. As shown in FIG. 10, the control device 100 includes: a memory 101 and a processor 102. The memory 101 is configured to store program codes. The processor 102 calls the program codes, and when the program codes are executed, it is configured to perform the following steps: acquiring an image output by the photographing device; detect a photographing mode of the photographing apparatus, the photographing apparatus including a photographing device; when the photographing mode of the photographing apparatus is a self-portrait mode , detecting at least one target object in the image and determining position information of the at least one target object in the image; and controlling photographing parameters of the photographing device according to the position information of the at least one target object in the image to capture images of the at least one target object in a preset setting.

Optionally, the preset setting includes at least one of the following: the at least one target object being at a preset position of the image captured by the photographing device; and a preset size of the at least one target object being in the image captured by the photographing device.

Optionally, the processor 102 controlling the photographing parameters of the photographing device according to the position information of the at least one target object in the image for capturing images of the at least one target object in the preset setting, is specifically configured to: track the target object in the image using a tracking algorithm according to the position information of the target object in the image; and during the process of tracking the target object in the image, control the photographing parameters of the photographing device to maintain the target object at the preset position of the image captured by the photographing device.

Optionally, during the process of tracking the target object in the image, the processor 102 controls the photographing parameters of the photographing device to maintain the target object at a preset position in the image captured by the photographing device is specifically configured to: during the process of tracking the target object in the image, control a photographing attitude of the photographing device to maintain the target object at the preset position of the image captured by the photographing device.

Optionally, when the processor 102 controls the photographing attitude of the photographing device, it is specifically configured to control the photographing attitude of the photographing device by adjusting an attitude of the photographing apparatus.

Optionally, the processor 102 may be further configured to: during the process of tracking the target object in the image, crop an area including the target object in the image to maintain the target object at the preset position in the image captured by the photographing device.

Optionally, the processor 102 controlling the photographing parameters of the photographing device according to the position information of the at least one target object in the image to capture images of the at least one target object in a preset setting may be specifically configured to: track the target object in the image using the tracking algorithm according to the position information of the target object in the image; and during the process of tracking the target object in the image, control the photographing parameters of the photographing device to maintain the target object at the preset size in the image captured by the photographing device.

Optionally, during the process of tracking the target object in the image, the processor 102 controlling the photographing parameters of the photographing device to maintain the target object at the preset size in the image captured by the photographing device may be specifically configured to: during the process of tracking the target object in the image, control the photographing device to zoom to maintain the target object at the preset size in the image captured by the photographing device.

Optionally, the processor 102 is further configured to: during the process of tracking the target object in the image, crop an area including the target object in the image to maintain the target object at the preset size in the image captured by the photographing device.

Optionally, the processor 102 controlling the photographing parameters of the photographing device according to the position information of the at least one target object in the image to capture images of the at least one target object may be specifically configured to: determine feature points of the plurality of target objects according to the position information of the plurality of target objects in the image; and control the photographing parameters of the photographing device according to the feature points of the plurality of the target objects to maintain the plurality of target objects at the preset position of the image captured by the photographing device.

Optionally, the processor 102 controlling the photographing parameters of the photographing device according to the position information of the at least one target object in the image to capture images of the at least one target object in the preset setting may be specifically configured to: determine a target object included in the plurality of target objects in the image that match a preset object; control photographing parameters of the photographing device according to position information of the target object included in the plurality of target objects that match the preset object in the image to maintain the target object included in the plurality of target objects that matches the preset object at the preset position in the image captured by the photographing device.

Optionally, when the processor 102 detects the photographing mode of the photographing apparatus, it is specifically configured to: detect a user's selection operation of the photographing mode of the photographing apparatus; and determine the photographing mode of the photographing apparatus according to the selection operation.

Optionally, when the processor 102 detects the user's selection operation of the photographing mode of the photographing apparatus, it is specifically configured to detect the user's selection operation of switching the photographing device to front camera.

Optionally, when the processor 102 detects the user's selection operation of the photographing mode of the photographing apparatus, it is specifically configured to detect the user's selection operation of rotating the photographing device around yaw axis as the rotation axis.

Optionally, when the processor 102 detects the photographing mode of the photographing apparatus, it is specifically configured to: detect attitude of the photographing apparatus; and determine the photographing mode of the photographing apparatus according to the attitude of the photographing apparatus.

Optionally, the processor 102 determining the photographing mode of the photographing apparatus according to the attitude of the photographing apparatus may be specifically configured to: when a difference between rotation angle of the photographing apparatus rotating around the yaw axis as the rotation axis and 180 degrees is less than a first angle threshold and an angle between the yaw axis of the photographing apparatus and a vertical direction is less than a second angle, determining that the photographing mode of the photographing apparatus is a self-portrait mode.

The control device of the embodiment shown in FIG. 10 may be configured to perform the technical solutions of the above method embodiments, and the implementation principles and technical effects are similar, and will not be repeated.

An embodiment of the present disclosure provides a photographing apparatus. FIG. 11 is a structural diagram of a photographing apparatus provided by another embodiment of the present disclosure. As shown in FIG. 11, a photographing apparatus 110 includes: a body 111, a photographing device 112, and a control device 113. The photographing device 112 is installed on the body, being configured to collect image information. The specific principles and implementation of the control device 113 are consistent with the control device 100 shown in FIG. 10, and will not be repeated.

Optionally, the photographing apparatus 110 may include a hand-held gimbal.

The photographing apparatus of the embodiment shown in FIG. 11 may be configured to perform the technical solutions of the above method embodiments, and its implementation principles and technical effects are similar, and will not be repeated.

In addition, this embodiment also provides a computer-readable storage medium on which a computer program is stored, and the computer program is executed by a processor to implement the photographing control method foregoing described embodiment.

In the several embodiments provided by the present disclosure, it should be understood that the device and method disclosed may be implemented in other manners. For example, the device embodiments described above are only schematic. For example, the division of the units may be only a division of logic functions. In actual implementation, there may be other divisions, for example, multiple units or components may be combined or integrated into another system, or some features can be ignored or not implemented. In addition, the displayed or discussed mutual coupling or direct coupling or connection may be through indirect coupling or connection through some interfaces, devices or units, and may be in electrical, mechanical or other forms.

The units described as separate components may or may not be physically separated, and the components displayed as units may or may not be physical units. That is, they may be located in one place, or may be distributed on multiple network units. Some or all of the units may be selected according to actual needs to achieve the purpose of the solution of this embodiment.

In addition, each function unit in each embodiment of the present disclosure may be integrated into one processing unit, or each unit may exist alone physically, or two or more units may be integrated into one unit. The above integrated unit can be implemented in the form of hardware, or in the form of hardware plus software function units.

The above integrated unit implemented in the form of a software function unit may be stored in a computer-readable storage medium. The above software function unit may be stored in a storage medium, and include several instructions to enable a computer device (e.g., a personal computer, a server, or a network device, etc.) or a processor to perform partial steps of the methods described in the embodiments of the present disclosure. The aforementioned storage medium may include: U disk, mobile hard drive, read-only memory (ROM), random-access memory (RAM), magnetic disk or optical disk and other medium that can store program codes.

Those skilled in the art can clearly understand that, for convenience and conciseness of the description, only the above-mentioned division of each function module is used as an example for illustration. In practical applications, the above-mentioned functions can be allocated by different function modules according to needs; that is, the internal structure of the device can be divided into different function modules to achieve all or part of the functions described above. For the specific operating process of the device described above, reference may be made to the corresponding process in the foregoing method embodiments, and details are not described herein again.

Finally, it should be noted that the above embodiments are only used to illustrate rather than to limit the technical solution of the present disclosure. Although the present disclosure has been described in detail with reference to the foregoing embodiments, those of ordinary skill in the art should understand: the technical solutions described in the foregoing embodiments can still be modified, or some or all of the technical features can be equivalently substituted, and these modifications or substitutions do not deviate the essence of the corresponding technical solutions from the range of the technical solutions of the embodiments of the present disclosure.

## Claims

1. A photographing control method applied to a photographing apparatus, the photographing apparatus including a photographing device, the method comprising:
acquiring an image output by the photographing device;
detecting a photographing mode of the photographing apparatus;
when the photographing mode of the photographing apparatus is a self-portrait mode, detecting at least one target object in the image, and determining position information of the at least one target object in the image; and
according to the position information of the at least one target object in the image, controlling a photographing parameter of the photographing device to shoot the at least one target object in a preset setting.

2. The method according to claim 1, wherein the preset setting includes at least one of: a preset position of the at least one target object in an image captured by the photographing device; and a preset size of the at least one target object in the image captured by the photographing device.

3. The method according to claim 1 or 2, wherein: according to the position information of the at least one target object in the image, controlling the photographing parameter of the photographing device to shoot the at least one target object in the preset setting comprises:
according to the position information of the target object in the image, using a tracking algorithm to track the target object in the image;
during a process of tracking the target object in the image, controlling the photographing parameter of the photographing device to maintain the target object at a preset position in the image captured by the photographing device.

4. The method according to claim 3, wherein during the process of tracking of the target object in the image, controlling the photographing parameter of the photographing device to maintain the target object at the preset position in the image captured by the photographing device comprises:
during the process of tracking the target object in the image, controlling a photographing attitude of the photographing device to maintain the target object at the preset position in the image captured by the photographing device.

5. The method of claim 4, wherein controlling the photographing attitude of the photographing device comprises:
controlling the photographing attitude of the photographing device by adjusting an attitude of the photographing apparatus.

6. The method according to any one of claims 3-5, further comprising:
during the process of tracking the target object in the image, cropping an area including the target object in the image to maintain the target object at the preset position in the image captured by the photographing device.

7. The method according to claim 1 or 2, wherein according to the position information of the at least one target object in the image, controlling the photographing parameter of the photographing device to shoot the at least one target object in the preset setting comprises:
according to the position information of the target object in the image, using a tracking algorithm to track the target object in the image;
during the process of tracking of the target object in the image, controlling the photographing parameter of the photographing device to maintain the target object at a preset size in the image captured by the photographing device.

8. The method according to claim 7, wherein during the process of tracking of the target object in the image, controlling the photographing parameter of the photographing device to maintain the target object at the preset size in the image captured by the photographing device comprises:
during the process of tracking the target object in the image, controlling the photographing device to zoom to maintain the target object remains at the preset size in the image captured by the photographing device.

9. The method according to claim 7 or 8, further comprising:
during the process of tracking the target object in the image, cropping an area including the target object in the image to maintain the target object at the preset size in the image captured by the photographing device.

10. The method according to claim 1 or 2, wherein according to the position information of the at least one target object in the image, controlling the photographing parameter of the photographing device to capture images of the at least one target object in the preset setting comprises:
determining feature points of a plurality of target objects according to position information of the plurality of target objects in the image;
according to the feature points of the plurality of target objects, controlling the photographing parameter of the photographing device to maintain the plurality of target objects at preset positions in the image captured by the photographing device.

11. The method according to claim 1 or 2, wherein according to the position information of the at least one target object in the image, controlling the photographing parameter of the photographing device to capture images of the at least one target object in the preset setting comprises:
determining a target object included in a plurality of target objects in the image that matches a preset object;
controlling the photographing parameter of the photographing device according to the position information of the target object included in the plurality of target objects that matches the preset object in the image to maintain the target object included in the plurality of target objects that matches the preset object at the preset position in the image captured by the photographing device.

12. The method according to any one of claims 1-11, wherein detecting the photographing mode of the photographing apparatus comprises:
detecting a selection operation of a user on the photographing mode of the photographing apparatus;
according to the selection operation, determining the photographing mode of the photographing apparatus.

13. The method according to claim 12, wherein detecting the selection operation of the user for the photographing mode of the photographing apparatus comprises:
detecting the selection operation of the user on switching the photographing device to face the user.

14. The method according to claim 12, wherein detecting the selection operation of the user for the photographing mode of the photographing apparatus comprises:
detecting the selection operation of the user on rotating the photographing device around yaw axis as a rotation axis to face the user.

15. The method according to any one of claims 1-11, wherein detecting the photographing mode of the photographing apparatus comprises:
detecting an attitude of the photographing apparatus;
according to the attitude of the photographing apparatus, determining the photographing mode of the photographing apparatus.

16. The method according to claim 15, wherein determining the photographing mode of the photographing apparatus according to the attitude of the photographing apparatus comprises:
when a difference between rotation angle of the photographing device around yaw axis as the rotation axis and 180 degrees is less than a first angle threshold, and an angle between the yaw axis of the photographing device and a vertical direction is less than a second angle threshold, determining that the photographing mode of the photographing apparatus is a self-portrait mode.

17. The method according to any one of claims 1-16, wherein the photographing apparatus comprises a hand-held gimbal.

18. A control device, comprising: a memory and a processor;
the memory being configured to store program codes;
the processor calling the program code, and when the program code is executed, being configured to perform:
obtaining an image output by the photographing device;
detecting a photographing mode of a photographing apparatus, the photographing apparatus including the photographing device;
when the photographing mode of the photographing apparatus is a self-portrait mode, detecting at least one target object in the image, and determining position information of the at least one target object in the image;
according to the position information of the at least one target object in the image, controlling a photographing parameter of the photographing device to shoot the at least one target object in a preset setting.

19. The control device according to claim 18, wherein the preset setting comprises at least one of:
a preset position of the at least one target object in an image captured by the photographing device;
a preset size of the at least one target object in the image captured by the photographing device.

20. The control device according to claim 18 or 19, wherein the processor controlling the photographing parameter of the photographing device according to the position information of the at least one target object in the image to shoot the at least one target object in the preset setting is specifically configured to:
according to the position information of the target object in the image, use a tracking algorithm to track the target object in the image;
during the process of tracking the target object in the image, control the photographing parameter of the photographing device to maintain the target object at the preset position of the image captured by the photographing device.

21. The control device according to claim 20, wherein the processor controlling the photographing parameter of the photographing device during the process of tracking the target object in the image to maintain the target object at the preset position in the image captured by the photographing device is specifically configured to:
during the process of tracking the target object in the image, control a photographing attitude of the photographing device to maintain the target object at the preset position in the image captured by the photographing device.

22. The control device according to claim 21, wherein when controlling the photographing attitude of the photographing device, the processor is specifically configured to:
control the photographing attitude of the photographing device by adjusting an attitude of the photographing device.

23. The control device according to any one of claims 20-22, wherein the processor is further configured to:
during the process of tracking the target object in the image, crop the area including the target object in the image to maintain the target object at the preset position in the image captured by the photographing device.

24. The control device according to claim 18 or 19, wherein the processor that controls the photographing parameter of the photographing device according to the position information of the at least one target object in the image to shoot the at least one target object in the preset setting is specifically configured to:
according to the position information of the target object in the image, use a tracking algorithm to track the target object in the image;
during the process of tracking of the target object in the image, control the photographing parameter of the photographing device to maintain the target object at the preset size in the image captured by the photographing device.

25. The control device according to claim 24, wherein the processor that controls the photographing parameter of the photographing device during the process of tracking of the target object in the image to maintain the target object at the preset size in the image captured by the photographing device is specifically configured to:
during the process of tracking of the target object in the image, control the photographing device to zoom to maintain the target object at the preset size in the image captured by the photographing device.

26. The control device according to claim 24 or 25, wherein the processor is further configured to:
during the process of tracking the target object in the image, crop an area including the target object in the image to maintain the target object at the preset size in the image captured by the photographing device.

27. The control device according to claim 18 or 19, wherein the processor that controls the photographing parameter of the photographing device according to the position information of the at least one target object in the image to capture images of the at least one target object in the preset setting is specifically configured to:
determine feature points of a plurality of target objects according to position information of the plurality of target objects in the image;
according to the feature points of the plurality of target objects, control the photographing parameter of the photographing device to maintain the plurality of target objects at preset positions in the image captured by the photographing device.

28. The control device according to claim 18 or 19, wherein the processor that controls the photographing parameter of the photographing device according to the position information of the at least one target object in the image to maintain the at least one target object in the preset setting shoots is specifically configured to:
determine a target object included in a plurality of target objects in the image that match the preset object;
Control the photographing parameter of the photographing device according to the position information of the target objects included in the plurality of target objects that matches the preset object in the image to maintain the target object included in the plurality of target objects that matches the preset object at the preset position of the image captured by the photographing device.

29. The control device according to any one of claims 18-28, wherein when detecting the photographing mode of the photographing apparatus, the processor is specifically configured to:
detect a selection operation of a user on the photographing mode of the photographing apparatus;
according to the selection operation, determine the photographing mode of the photographing apparatus.

30. The control device according to claim 29, wherein when detecting the selection operation of the user for the photographing mode of the photographing apparatus, the processor is specifically configured to:
detect the selection operation that the user on switching the photographing device to face the user for photographing.

31. The control device according to claim 29, wherein detecting the selection operation of the user for photographing mode of the photographing apparatus, the processor is specifically configured to:
detect the selection operation that the user on rotating the photographing device around the yaw axis as a rotation axis to face the user.

32. The control device according to any one of claims 18-28, wherein when detecting the photographing mode of the photographing apparatus, the processor is specifically configured to:
detect an attitude of the photographing apparatus;
determine the photographing mode of the photographing apparatus according to the attitude of the photographing device.

33. The control device according to claim 32, wherein the processor that determines the photographing mode of the photographing apparatus according to the attitude of the photographing apparatus is specifically configured to:
when a difference between rotation angle of the photographing apparatus around yaw axis as the rotation axis and 180 degrees is less than a first angle threshold, and an angle between the yaw axis of the photographing apparatus and a vertical direction is less than a second angle threshold, determine that the photographing mode of the photographing apparatus is a self-portrait mode.

34. A photographing apparatus, comprising:
a body;
a photographing device installed on the body and configured to collect image information; and
a control device according to any one of claims 18 to 33.

35. The photographing apparatus according to claim 34, wherein the photographing apparatus comprises a hand-held gimbal.

36. A computer-readable storage medium storing a computer program, wherein the computer program is executed by a processor to implement the method according to any one of claims 1-17.
